# EUROPÄISCHE PATENTSCHRIFT

(11) **EP 4 347 524 B1**
(45) Veröffentlichungstag und Bekanntmachung des Hinweises auf die Patenterteilung: **02.04.2025**
(21) Anmeldenummer: 22732062.9
(22) Anmeldetag: 30.05.2022
(51) Int. Cl.: C04B 7/42

(54) **VERFAHREN ZUR HERSTELLUNG VON ZEMENTKLINKER UNTER BEIMENGUNG VON BLAUKALK**
METHOD FOR PRODUCING CEMENT CLINKER BY ADMIXING CARBIDE LIME
PROCÉDÉ DE PRODUCTION DE CLINKER DE CIMENT PAR MÉLANGE PAR ADMIXTION DE CHAUX DE CARBURE

(30) Priorität: 31.05.2021 DE 102021002782
(43) Veröffentlichungstag der Anmeldung: 10.04.2024
(73) Patentinhaber: KHD Humboldt Wedag GmbH, 51149 Köln (DE)
(72) Erfinder: MERSMANN, Matthias, 52222 Stolberg (DE); STREIT, Norbert, 53721 Siegburg (DE)
(86) Internationale Anmeldenummer: PCT/EP2022/064638
(87) Internationale Veröffentlichungsnummer: WO 2022/253769

(56) Entgegenhaltungen:
- CN-A- 103 922 625
- PL-A1- 415 929

## Beschreibung

Die Erfindung betrifft ein Verfahren zur Herstellung von Zementklinker, aufweisend die folgenden Verfahrensschritte: Vorwärmen von kalk- und silikathaltigem Rohmehl in einem Vorwärmer, Entsäuern des vorgewärmten Rohmehls in einem Calcinator, Sintern des entsäuerten Rohmehls in einem Drehrohrofen, Abschrecken des zu Zementklinker gesinterten Rohmehls in einem Kühler, wobei das vorgewärmte Rohmehl in den Fuß des Calcinators aufgegeben wird, wo das Rohmehl im Aufwind der aus dem Drehrohrofen in den Calcinator strömenden Abgases suspendiert wird.

Zur Herstellung von Zementklinker wird aus einer Mischung aus kalzitischen und tonigen Komponenten unter hohem thermischen Aufwand formell Kohlendioxid (CO₂) aus den in den zuvor genannten Phasen enthaltenden Calciumcarbonats (CaCO₃) ausgetrieben, um schlussendlich einen an Calciumoxid (CaO) reichen Ausgangsstoff für die Bildung der zementklinker-spezifischen Mineralphasen zu erzeugen.

Zement als Endprodukt ist in der Herstellung so CO₂-intensiv, dass die Produktion für bis zu acht Prozent des globalen jährlichen Kohlenstoffdioxidausstoßes verantwortlich sein soll. Ein Kennwert, der in diesem Zusammenhang oft genannt wird, ist die spezifische Kohlenstoffdioxid-Emission. Diese beschreibt, wieviel Tonnen CO₂ bei der Erzeugung einer Tonne Zement ausgestoßen wird. Im Jahr 2018 lag der Wert laut Deutscher Emissionshandelsstelle (DEHSt) etwa bei 0,59. Daraus ergibt sich ein Kohlenstoffdioxidausstoß von 590 Kilogramm CO₂ pro Tonne Zement. 2018 wurden in Deutschland insgesamt rund 33,7 Millionen Tonnen des Baustoffs produziert. Der hohe CO₂-Ausstoß erscheint sehr hoch, erscheint aber gemessen am zivilen Nutzen von Zement noch tragbar. Dennoch ist man bestrebt, den CO₂-Ausstoß bei der Zementherstellung zu senken.

Im Zuge der benötigten Senkung der CO₂-Emission bei der Herstellung von Zementklinker ist es vorteilhaft, statt Kalkstein (CaCO₃) eine alternative Calciumquelle als Ausgangsmaterial einzusetzen. In diesem Ausgangsmaterial sollte das Calcium oxidisch (CaO) und nicht als Carbonat (CO₃²⁻) gebunden vorliegen. Das Ausgangsmaterial sollte auch geringere Reaktionstemperaturen zum Brennen im Ofenprozess erfordern als es beim heute üblichen Brennprozess der Fall ist. Ein solches Ausgangsmaterial zur Herstellung von Zementklinker würde es nicht erfordern, dass Kohlendioxid (CO₂) thermisch aus dem Ausgangsmaterial erst ausgetrieben werden muss. Der Herstellungsprozess zur Herstellung von Zementklinker könnte somit weniger Brennstoff erfordern. Ein bekannter alternativer Ausgangsstoff als Rohstoffsubstitution ist Karbidschlacke (auch Blaukalk genannt), bei der aus heutiger Sicht chemisch rückständigen Produktion von Acetylen (C₂H₂) aus Carbid (CaC₂), einem chemischen Grundstoff, anfällt. Die Acetylenherstellung wird in modernen petrochemischen Anlagen katalytisch aus leichten Erdölfraktionen gewonnen. Noch in den 80er und 90er Jahren des 20. Jahrhunderts wurde Carbid (CaC₂) zu 70% zur Herstellung von Acetylen verwendet und zu 30% zur Herstellung von Calciumcyanamid (CaCN₂), Kalkstickstoff, einem vergleichsweise billigen Stickstoffdünger für Pflanzen. Um die Umsetzung von Calciumcarbid (CaC₂) zu Calciumcyanamid (CaCN₂) unter stark exothermer Reaktion zu kontrollieren, wird nach einem bekannten Verfahren dem Calciumcarbid (CaC₂) Calciumchlorid (CaCl₂) und auch Calciumfluorid (CaF₂) zugefügt. Das führt zu einer erheblichen Herabsetzung der Reaktionstemperatur und auch zur Herabsetzung einer unerwünschten Entstehung von Calciumcyaniden (Ca(CN)₂). Die bei dieser Umsetzung zu Calciumcyanamid (CaCN₂) entstehenden halogenierten Kohlenstoffverbindungen, die in dem Kalkstickstoff enthalten sind, wurden zu Anfang des 20. Jahrhunderts als willkommene, herbizide Wirkung des Kalkstickstoffs aufgefasst. Aus heutiger Sicht ist der Eintrag von halogenierten Kohlenwasserstoffen in die Umwelt nicht mehr tragbar. Die in heutiger Zeit immer noch großen Mengen von Blaukalk stammen aus industriellen Mischabfällen der Carbid- und Kalkstickstoffherstellung. Blaukalk ist also ein industrieller und nicht problemfreier Abfallstoff, der mit halogenierten Schadstoffen belastet ist. Die Verwendung von Blaukalk als Ausgangsstoff zur Herstellung von Zementklinker als Zwischenprodukt zur Herstellung von Zement dient somit aus umweltpolitischer Sicht zu zwei wünschenswerten Zielen, nämlich einerseits, die Deponieeinlagerung von halogenierten Kohlenwasserstoffen beinhaltenden Deputaten zu vermeiden und andererseits, die Bildung von Kohlendioxid (CO₂) bei der Zementherstellung zu verringern. Es ist sogar denkbar, bereits deponierte Carbidschlacke als Deputat wiederzuverwenden. Um zu vermeiden, dass die im Blaukalk enthaltenen Schadstoffe beim Einsatz als Ausgangstoff zur Herstellung von Zementklinker als flüchtige Bestandteile in die Atmosphäre gelangen, muss der isolierte Herstellungsprozess für Zementklinker entsprechend angepasst werden.

In der europäischen Patentanmeldung EP 3 670 468 A1 wird zur Herstellung eines Ausgangstoffes für die Zementproduktion Blaukalk als Beimengung gelehrt, dabei werden Schadstoffe durch metallurgische Verfahren zur Behandlung von Schlacken abgetrennt.

In der chinesischen Patentanmeldung CN 103 922 625 A wird eine Anlage zur Herstellung von Zementklinker offenbart, in der Kalkschlamm als weiterer Rohstoff einem Kalzinator zugeführt wird. Vor dem Einspeisen in den Kalzinator wird der Kalkschlamm mit der Abluft eines Klinkerkühlers in einer Maltrocknungsanlage getrocknet und die Trocknungsabgase werden atmosphärisch verworfen. Dabei gelangen flüchtige organische Bestandteile aus dem Kalkschlamm in die Umwelt.

In dem Buch " Immissionsschutz: Recht-Umsetzung-Messung-Emissionsminderung. Hrsg. / Karl Thome-Kozmiensky; Margit Löschau; Band 5 Neuruppin TK Verlag Karl Thome Kozmiensky, 2015. S. 241-262" wird von einer Zementanlage berichtet, in der Kalkschlamm zwischen Drehrohrofen und Wärmetauscher aufgegeben worden ist, dennoch wurde eine hohe Immission von Schadstoffen beobachtet. Die Immission wird dem Aufgabeort des Kalkschlamms zugeschrieben.

Der Erfindung liegt die Aufgabe zugrunde, die Verwendung des mit organischen Spuren beladenen Reststoffes Karbidschlacke in einer thermischen Ofenlinie zur Herstellung von Zementklinker so zu gestalten, dass keine toxischen Emissionen der flüchtigen Komponenten im Wärmetauscherabgas entstehen.

Die der Erfindung zu Grunde liegende Aufgabe wird gelöst durch ein Verfahren mit den Merkmalen nach Anspruch 1. Weitere vorteilhafte Ausgestaltungen des Verfahrens sind in den Unteransprüchen zu Anspruch 1 angegeben.

Nach dem Gedanken der Erfindung ist vorgesehen, den Blaukalk in den Fuß des Calcinators aufzugeben. Die ursprüngliche Funktion des Calcinators ist es, das vorgewärmte Rohmehl zu entsäuern. Formell wird dabei Kohlendioxid (CO₂) aus Kalk, Calciumcarbonat (CaCO₃) ausgetrieben, so dass ungelöschter Kalk (CaO) entsteht. Blaukalk mit einer hohen Restfeuchte hat als Hauptbestandteil Ca(OH)₂. Ein Entsäuern wäre damit nicht mehr notwendig, so dass die Aufgabe des Blaukalks auf den Calcinator zunächst überflüssig und widersinnig erscheint. Durch die Aufgabe auf den Calcinator wird der Blaukalk in den heißen Abgasen des Drehrohrofens stark erwärmt. Dabei verflüchtigen sich gegebenenfalls im Blaukalk enthaltene organische Bestandteile. Diese organischen Bestandteile, die nicht in die freie Atmosphäre gelangen sollen, werden unter den Bedingungen im Calcinator verbrannt. Das neben dem Blaukalk im Calcinator vorhandene Rohmehl, das entsäuert wird, katalysiert den Abbau von Schadstoffen. Eventuell sich beim Ausbrand der organischen Bestandteile des Blaukalks ausbildende Stickoxide werden durch den im Calcinator aufrechterhaltenden Kohlenmonoxid (CO)-gehalt reduziert. Bei der Suche des optimalen Einsatzes von Blaukalk als Substitutionsrohstoff zur Herstellung von Zementklinker hat sich die Aufgabe auf den Calcinator als vorteilhaft erwiesen, weil die organischen Emissionen in die Atmosphäre damit nahezu quantitativ vermieden werden können.

Das Mengenverhältnis von Rohmehl zu Blaukalk kann bei dieser Verfahrensführung bis 50:50 bezogen auf Gewichts% betragen. Bei einer weiteren Substitution von Rohmehl würde die Vorwärmstufe einer gattungsgemäßen Anlage zur Herstellung von Zement zu wenig Wärme aus den Abgasen rekuperieren, so dass Maßnahmen zur besseren Wärmerekuperation getroffen werden müssten.

Bei der Substitution im Bereich bis zu 50% ist eine deutlich höhere Abgastemperatur des Vorwärmers zu beobachten, dass weniger Rohmehl zur Entsäuerung vorgewärmt werden muss. Die geringere Menge Rohmehl hat weniger Wärmekapazität, um die Wärme aus den Abgasen des Drehrohrofens zu rekuperieren. Die erhöhte Abgastemperatur kann aber dazu verwendet werden, den in der Regel bis zu 25% Restfeuchte aufweisenden Blaukalk in einer Mahltrocknungsanlage zu trocknen. Dabei sollte die Trocknung nicht quantitativ erfolgen, um zu vermeiden, dass mit der Trocknungsabluft der Blaukalk-Trocknung flüchtige organische Bestandteile ("Volatile Organic Components, VOC") in die Atmosphäre gelangen. Bei einer nach dem Trocknen im Blaukalk verbliebenen Restfeuchte von 2% bis 5% werden die flüchtigen organischen Bestandteile im Blaukalk gebunden bis diese im Calcinator sicher verbrannt werden. Um die Trocknungsqualität dennoch zu erhöhen, kann vorgesehen sein, die Abgase der Trocknung des Blaukalks in den Kühler aufzugeben, so dass beim Trocknen gegebenenfalls entstehende Emissionen in den Herstellungsprozess zurückgeführt und verbrannt werden. Dort, im Klinkerkühler, sollten die Abgase so in den Klinkerkühler aufgegeben werden, dass diese mit der restlichen Kühlerluft als Sekundärluft in den Drehrohrofen aufgegeben werden oder als Tertiärluft in den Calcinator mitgerissen werden. Durch das Trocknen des Blaukalks bei Temperaturen der Abluft des Vorwärmers wird die meiste niederkalorische Wärme im Herstellungsprozess zur Verdampfung der Feuchtigkeit benutzt, die bei der Wasserverdampfung erhebliche Wärmemengen zehrt. Ist die Feuchtigkeit einmal in den Dampfraum übergegangen, so kann diese Abluft auch mit der wesentlichen heißeren Tertiärluft oder mit der Sekundärluft vermischt werden, ohne dass die Feuchtigkeit zur starken Herabsetzung der Temperatur führt.

Die Erfindung wird anhand der folgenden Figuren näher erläutert. Es zeigt:

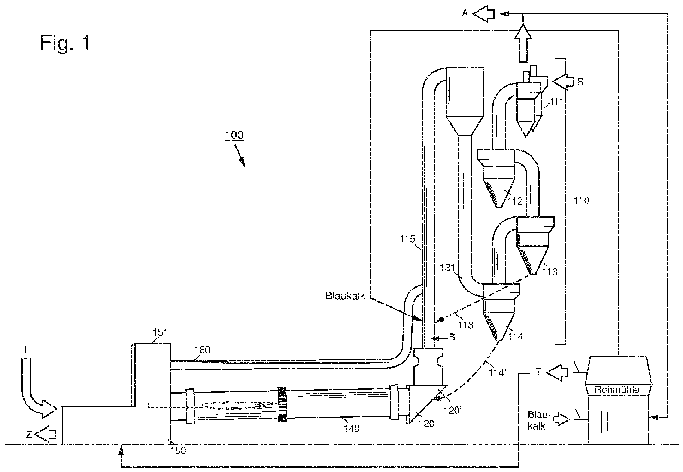

Fig. 1 eine Anlage zur Durchführung es erfindungsgemäßen Verfahrens.

**In** **Figur 1** ist eine Anlage 100 zur Herstellung von Zementklinker skizziert. Die Anlage 100 weist auf einen Vorwärmer 110, in den in den obersten Wärmetauscherzyklon 111 Rohmehl R aufgegeben wird. Das Rohmehl R durchläuft von oben nach unten danach die Wärmetauscherzyklone 112 und 113. Das aus Wärmetauscherzyklon 113 austretende und bereits vorgewärmte Rohmehl R fällt über ein Fallrohr 113' in den Fuß des Calcinators 115. Dort wird das vorgewärmte Rohmehl R von den aus dem Drehrohrofen 140 über die Drehrohrofeneinlaufkammer 120 in den Calcinator 115 strömende Abgasen mitgerissen und suspendiert. Das mit den Abgasen aufsteigende Rohmehl wird in der Wärme der Abgase und der Wärme des Brenners B am Fuße des Calcinators 115 entsäuert. Über den absteigenden Ast 131 des Calcinators 115 strömt die entsäuerte Rohmehlsuspension in den untersten Wärmetauscherzyklon 114, wo das entsäuerte Rohmehl abgetrennt und über ein Fallrohr 114' in die Drehrohrofeneinlaufkammer 120 fällt und dort unter den aufsteigenden Abgasen in den Drehrohrofen 140 gelangt. Nach dem Gedanken der Erfindung ist vorgesehen, dass Blaukalk mit dem Rohmehl in den Fuß des Calcinators 115 aufgegeben wird und dort zusammen mit dem entsäuerten Rohmehl suspendiert wird. Der Weg des Blaukalks als Rohmehlsubstitution ist ab hier der gleiche wie für das Rohmehl. Da der Blaukalk keine endotherme Entsäuerungsreaktion zeigt, sondern nur einen Dehydratationsschritt, der weniger endotherm ist, steht im Vorwärmer mehr Wärme zur Verfügung, die sich durch eine höhere Abgastemperatur am obersten Wärmetauscherzyklon 111 bemerkbar macht. Um die veränderte Wärmebilanz der Anlage 100 bei Zugabe von Blaukalk als Rohmehlsubstitution vorteilhaft zu nutzen, kann vorgesehen sein, zumindest einen Teil der Abluft A aus dem obersten Wärmetauscherzyklon 11 in eine Mahltrocknungsvorrichtung, hier eine Rohmühle zu leiten.

Dort wird der zusammengebackene Blaukalk zerkleinert und getrocknet. Je nach Trocknungsgrad kann es vorteilhaft sein, die Trocknungsabluft T in den Kühler 150 zu leiten, so dass gegebenenfalls in der Trocknungsabluft T vorhandene flüchtige organische Bestandteile in der Wärme des Drehrohrofens 140 verbrannt werden. Dabei kann die Trocknungsabluft über den Kühler 150 auch in die Tertiärluftleitung 160 geleitet werden, wobei die Temperatur der Tertiärluftleitung so hoch ist, dass organische flüchtige Bestandteile schon in der Tertiärluftleitung 160 beginnen, zu pyrolysieren.

### BEZUGSZEICHENLISTE

| | | | |
|---|---|---|---|
| 100 | Anlage | 140 | Drehrohrofen |
| 110 | Vorwärmer | 150 | Kühler |
| 111 | Wärmetauscherzyklon | 151 | Kühlerkopf |
| 112 | Wärmetauscherzyklon | 160 | Tertiärluftleitung |
| 113 | Wärmetauscherzyklon | | |
| 113' | Fallrohr | A | Abluft |
| 114 | Wärmetauscherzyklon | B | Brenner |
| 114' | Fallrohr | L | Luft |
| 115 | Calcinator | R | Rohmehl |
| 120 | Drehrohrofeneinlaufkammer | T | Trocknungsluft |
| 131 | absteigender Ast | Z | Zementklinker |

## Patentansprüche

1. Verfahren zur Herstellung von Zementklinker, aufweisend die folgenden Verfahrensschritte:
- **Vorwärmen** von kalk- und silikathaltigem Rohmehl (R) in einem Vorwärmer (110),
- **Entsäuern** des vorgewärmten Rohmehls (R) in einem Calcinator (115),
- **Sintern** des entsäuerten Rohmehls in einem Drehrohrofen (140),
- **Abschrecken** des zu Zementklinker gesinterten Rohmehls (R) in einem Kühler (150),
wobei das vorgewärmte Rohmehl (R) in den Fuß des Calcinators (115) aufgegeben wird, wo das Rohmehl (R) im Aufwind der aus dem Drehrohrofen (140) in den Calcinator (115) strömenden Abgases suspendiert wird,
**gekennzeichnet durch**
- Aufgeben von Blaukalk in den Fuß des Calcinators (115).
- Führen von Abgas aus dem Vorwärmer (110) in eine Mahltrocknungsvorrichtung für den Blaukalk, und
- Führen der Trocknungsabluft (T) aus der Mahltrocknungsvorrichtung in den Kühler (150), so dass die Trocknungsabluft (T) als Sekundärluft in den Drehrohrofen (140) oder in die Tertiärluftleitung (160) gelangt.

2. Verfahren nach Anspruch 1,
**gekennzeichnet durch**
ein Mengenverhältnis von Rohmehl zu Blaukalk von 90:10 bis 50:50 als Gewichtsprozent.

3. Verfahren nach Anspruch 1 oder 2,
**gekennzeichnet durch**
Trocknen des Blaukalks von einer Restfeuchte mit 20% bis 25% auf eine Restfeuchte von 2% bis 5%.

## Claims

1. Process for producing cement clinker, comprising the following process steps:
- preheating raw meal (R) containing lime and silicate in a preheater (110),
- deacidifying the preheated raw meal (R) in a calciner (115),
- sintering the deacidified raw meal in a rotary kiln (140),
- quenching the raw meal (R) sintered into cement clinker, in a cooler (150),
wherein the preheated raw meal (R) is fed into the base of the calciner (115), where the raw meal (R) is suspended in the updraught of the offgas flowing out of the rotary kiln (140) into the calciner (115),
**characterized by**
- feeding carbide lime into the base of the calciner (115),
- passing offgas from the preheater (110) into a grinding-drying device for the carbide lime, and
- passing the drying exhaust air (T) from the grinding-drying device into the cooler (150), so that the drying exhaust air (T) enters the rotary kiln (140) or the tertiary air conduit (160) as secondary air.

2. Process according to Claim 1,
**characterized by**
a ratio of raw meal to carbide lime of 90:10 to 50:50 as a weight percentage.

3. Process according to Claim 1 or 2,
**characterized by**
drying the carbide lime from a residual moisture content at 20% to 25% to a residual moisture content of 2% to 5%.

## Revendications

1. Procédé de production d'un clinker de ciment, comprenant les étapes de procédé suivantes :
- le préchauffage d'une farine crue (R) contenant de la chaux et du silicate dans un dispositif de préchauffage (110),
- la désacidification de la farine crue préchauffée (R) dans un dispositif de calcination (115),
- le frittage de la farine crue désacidifiée dans un four rotatif (140),
- la trempe de la farine crue (R) frittée en clinker de ciment dans un dispositif de refroidissement (150),
la farine crue (R) préchauffée étant chargée dans le pied du dispositif de calcination (115), où la farine crue (R) est mise en suspension dans le courant ascendant des gaz d'échappement s'écoulant du four rotatif (140) dans le dispositif de calcination (115),
**caractérisé par**
- le chargement de la chaux de carbure au pied du dispositif de calcination (115).
- l'acheminement de gaz d'échappement du dispositif de préchauffage (110) vers un dispositif de broyage-séchage de la chaux de carbure, et
- l'acheminement d'air de séchage (T) du dispositif de broyage-séchage vers le dispositif de refroidissement (150), de telle sorte que l'air de séchage (T) arrive sous forme d'air secondaire dans le four rotatif (140) ou dans la conduite d'air tertiaire (160).

2. Procédé selon la revendication 1,
**caractérisé par**
un rapport quantitatif de la farine crue à la chaux de carbure de 90:10 à 50:50 en pourcentage en poids.

3. Procédé selon la revendication 1 ou 2,
**caractérisé par**
le séchage de la chaux de carbure d'une humidité résiduelle de 20% à 25% à une humidité résiduelle de 2% à 5%.
